# EUROPEAN PATENT APPLICATION

(11) **EP 4 572 180 A1**
(43) Date of publication of application: **18.06.2025**
(21) Application number: 23864628.5
(22) Date of filing: 07.09.2023
(51) Int. Cl.: H04B 7/185

(54) **CHIP, CIRCUIT BOARD ASSEMBLY, AND COMMUNICATION DEVICE**

(30) Priority: 16.09.2022 CN 202211128798
(71) Applicant: Huawei Technologies Co., Ltd., Shenzhen, Guangdong 518129 (CN)
(72) Inventor: HUANG, Xin, Shenzhen, Guangdong 518129 (CN); HU, Jianyue, Shenzhen, Guangdong 518129 (CN); YU, Yi, Shenzhen, Guangdong 518129 (CN); OU, Songlin, Shenzhen, Guangdong 518129 (CN)
(74) Representative: Gill Jennings & Every LLP
(86) International application number: PCT/CN2023/117500
(87) International publication number: WO 2024/055896

(57) **Abstract**

A chip, a circuit board assembly, and a communication apparatus are provided, to reduce an area of a chip integrating a satellite positioning function and a satellite communication function and reduce system costs. The chip includes a satellite communication system radio frequency RF path, a first satellite positioning system RF path, and a first phase-locked loop. The satellite communication system RF path and the first satellite positioning system RF path share the first phase-locked loop. Through sharing of the phase-locked loop, a quantity of phase-locked loops disposed in the chip can be reduced, thereby reducing the area of the chip and reducing the system costs.

## Description

### CROSS-REFERENCE TO RELATED APPLICATIONS

This application claims priority to Chinese Patent Application No. 202211128798.9, filed with the China National Intellectual Property Administration on September 16, 2022, and entitled "CHIP, CIRCUIT BOARD ASSEMBLY, AND COMMUNICATION APPARATUS", which is incorporated herein by reference in its entirety.

### TECHNICAL FIELD

This application relates to the field of satellite communication technologies, and in particular, to a chip, a circuit board assembly, and a communication apparatus.

### BACKGROUND

In a satellite communication scenario, a satellite positioning system is described by using a radio navigation satellite system (radio navigation satellite system, RNSS) as an example. The RNSS may broadcast a radio navigation satellite signal. A user can independently complete ranging and positioning after capturing sufficient satellites. A satellite communication system is described by using a radio determination satellite system (radio determination satellite system, RDSS) as an example. The RDSS is a unique service function of a BeiDou navigation satellite system, and can provide a two-way short message information service (that is, a satellite communication function). For example, the user may complete positioning based on a satellite signal sent by the RNSS. Further, when the user needs to communicate, the user may send a message to a satellite based on an RDSS transmitter (transmitter, TX) link, the satellite forwards the received message to a ground station, and the user may parse, based on an RDSS RX link, the message forwarded by the ground station by using the satellite.

With development of satellite communication, a dual-mode satellite navigation system-on-chip (system-on-chip, SoC) gradually emerges; and integrates signal processing technologies of the satellite positioning system and the satellite communication system, implements an organic combination of multi-mode navigation and location reporting, and forwards, to a specified user by using a satellite, a precise positioning result obtained through positioning of the satellite positioning system, without being limited by a region or a natural condition. However, currently, a chip integrating the signal processing technologies of the satellite positioning system and the satellite communication system has a large area and high costs.

### SUMMARY

This application provides a chip, a circuit board assembly, and a communication apparatus, to reduce an area of a chip integrating a satellite positioning function and a satellite communication function, and reduce system costs.

According to a first aspect, this application provides a chip. The chip may include a satellite communication system radio frequency (radio frequency, RF) path, a first satellite positioning system RF path, and a first phase-locked loop, where the satellite communication system RF path and the first satellite positioning system RF path may share the first phase-locked loop. In this way, the satellite communication system RF path and the first satellite positioning system RF path share the first phase-locked loop, so that a quantity of phase-locked loops disposed in the chip can be reduced, thereby reducing an area of the chip and reducing system costs.

In a possible design, the chip may further include a first switch, where the first switch includes a first end, a second end, and a third end. The first end may be connected to the first phase-locked loop, the second end may be connected to the satellite communication system RF path, and the third end may be connected to the first satellite positioning system RF path. When the first end is connected to the second end, the first phase-locked loop may be connected to the satellite communication system RF path. When the first end is connected to the third end, the first phase-locked loop may be connected to the first satellite positioning system RF path. In this way, the satellite communication system RF path and the first satellite positioning system RF path may share the first phase-locked loop by using the first switch.

In a possible design, the second end may be connected to a mixer in the satellite communication system RF path, and the third end may be connected to a mixer in the first satellite positioning system RF path. In this way, when the first end of the first switch is connected to the second end or the third end, a connection to a corresponding path may be implemented.

In a possible design, the first phase-locked loop is connected to the satellite communication system RF path, and is connected to the first satellite positioning system RF path. In this way, the satellite communication system RF path and the first satellite positioning system RF path may both use the first phase-locked loop, to share the first phase-locked loop.

In a possible design, the first phase-locked loop may be connected to a mixer in the satellite communication system RF path, and is connected to a mixer in the first satellite positioning system RF path. In this way, it can be ensured that the first phase-locked loop is connected to both the satellite communication system RF path and the first satellite positioning system RF path.

In a possible design, the chip may further include a second satellite positioning system RF path, where the first phase-locked loop may be connected to the second satellite positioning system RF path. In this way, the satellite communication system RF path, the first satellite positioning system RF path, and the second satellite positioning system RF path may share one phase-locked loop. This can reduce a quantity of phase-locked loops disposed in the chip and reduce the area of the chip.

In a possible design, the first phase-locked loop may be connected to a mixer in the second satellite positioning system RF path. In this way, it can be ensured that the first phase-locked loop is connected to the second satellite positioning system RF path.

In a possible design, the satellite communication system RF path, the first satellite positioning system RF path, and the second satellite positioning system RF path correspond to different frequency division coefficients. In this way, when the satellite communication system RF path, the first satellite positioning system RF path, and the second satellite positioning system RF path share the first phase-locked loop, a corresponding frequency is generated by using the first phase-locked loop.

In a possible design, the chip may further include a second phase-locked loop and a second satellite positioning system RF path, where the second phase-locked loop is connected to the second satellite positioning system RF path. In this way, positioning of a terminal device can be ensured by using the second satellite positioning system RF path, and positioning continuity of the terminal device can be ensured.

In a possible design, the second phase-locked loop is connected to a mixer in the second satellite positioning system RF path. In this way, it can be ensured that the second phase-locked loop is connected to the second satellite positioning system RF path.

In a possible design, the first satellite positioning system RF path may be a satellite positioning system L1 RF path, and the second satellite positioning system RF path may be a satellite positioning system L5 RF path or a satellite positioning system L2 RF path.

In a possible design, the second satellite positioning system RF path may include at least one of the following: an analog-to-digital converter, a variable-gain amplifier, a low-pass filter, a mixer, or a low-noise amplifier.

In a possible design, the satellite communication system RF path may include at least one of the following: a digital-to-analog converter, a low-pass filter, a mixer, or a power amplifier; and the first satellite positioning system RF path may include at least one of the following: an analog-to-digital converter, a variable-gain amplifier, a low-pass filter, a mixer, or a low-noise amplifier.

In a possible design, the chip may further include a satellite communication system baseband unit, where the satellite communication system baseband unit is connected to the satellite communication system RF path, and the satellite communication system baseband unit is configured to input a signal to the satellite communication system RF path. In this way, functions such as assembly and noise cancellation of communication information may be implemented by using the satellite communication system baseband unit for use of the satellite communication system RF path.

In a possible design, the chip may further include a first satellite positioning system baseband unit and a second satellite positioning system baseband unit. The first satellite positioning system baseband unit is connected to the first satellite positioning system RF path, and the first satellite positioning system baseband unit is configured to receive a signal output by the first satellite positioning system RF path. The second satellite positioning system baseband unit is connected to the second satellite positioning system RF path, and the second satellite positioning system baseband unit is configured to receive a signal output by the second satellite positioning system RF path. In this way, searching and tracking of a carrier frequency and a code phase of a satellite positioning system signal, message parsing, and the like can be implemented by using the satellite positioning system baseband units, to resolve information such as a location, a speed, and time of the terminal device.

According to a second aspect, this application provides a circuit board assembly, where the circuit board assembly may include a circuit board and the chip in the first aspect and the possible designs, and the chip is disposed on the circuit board.

According to a third aspect, this application provides a communication apparatus. The communication apparatus may include the chip in the first aspect and the possible designs.

In a possible design, the communication apparatus may be a terminal device or the like.

For each of the second aspect and the third aspect and technical effects that may be achieved in each of the second aspect and the third aspect, refer to descriptions of the technical effects that may be achieved in the first aspect or possible solutions in the first aspect. Details are not described herein again.

### BRIEF DESCRIPTION OF DRAWINGS

FIG. 1 is a diagram of an application scenario according to this application;
FIG. 2 is a diagram of an operating process of an RNSS and an RDSS according to this application;
FIG. 3 is a diagram of a structure of a chip according to this application;
FIG. 4 is a diagram in which an RDSS RF path and a first RNSS RF path share a first phase-locked loop by using a first switch according to this application;
FIG. 5 is a diagram in which an RDSS RF path and a first RNSS RF path both use a first PLL according to this application;
FIG. 6 is a diagram of a connection between a second PLL and a second RNSS RF path according to this application;
FIG. 7 is a diagram in which an RDSS RF path, a first RNSS RF path, and a second RNSS RF path share a first PLL according to this application;
FIG. 8 is another diagram in which an RDSS RF path, a first RNSS RF path, and a second RNSS RF path share a first PLL according to this application;
FIG. 9 is a diagram of a chip including an RDSS baseband unit, a first RNSS baseband unit, and a second RNSS baseband unit according to this application;
FIG. 10 is a diagram of a circuit board assembly according to this application;
FIG. 11 is a diagram of another circuit board assembly according to this application;
FIG. 12 is a diagram of still another circuit board assembly according to this application; and
FIG. 13 is a diagram of RNSS transmission and RDSS transmission in parallel according to this application.

### DESCRIPTION OF EMBODIMENTS

The following further describes in detail this application with reference to the accompanying drawings.

Embodiments of this application provide a chip, a circuit board assembly, and a communication apparatus, to reduce an area of a chip integrating a satellite positioning function and a satellite communication function, and reduce system costs.

In descriptions of this application, terms such as "first" and "second" are merely used for distinction and description, and should not be understood as an indication or implication of relative importance, or as an indication or implication of an order.

In descriptions of this application, "at least one item (piece, or type)" means one item (piece, or type) or a plurality of items (pieces, or types), and a plurality of items (pieces, or types) mean two or more items (pieces, or types). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural.

In this application, the term "and/or" describes an association relationship between associated objects, and represents that three relationships may exist. For example, A and/or B may represent the following cases: Only A exists, both A and B exist, and only B exists, where A and B may be singular or plural. "/" indicates "or". For example, a/b indicates a or b.

To describe the technical solutions in embodiments of this application more clearly, the following describes in detail a chip, a circuit board assembly, and a communication apparatus provided in embodiments of this application with reference to the accompanying drawings.

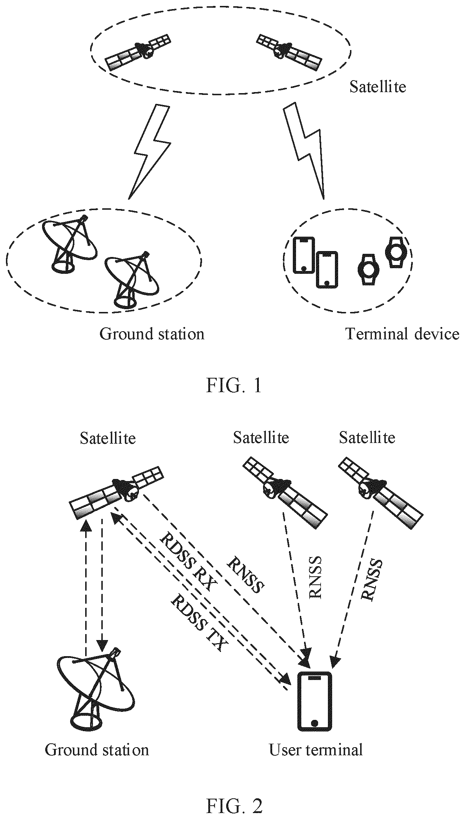

FIG. 1 shows a possible application scenario to which a chip, a circuit board assembly, and a communication apparatus provided in this application are applicable. The application scenario includes at least one satellite, at least one ground station, and at least one terminal device. In this application scenario, the terminal device may send a message to the satellite, and the satellite forwards the message to the ground station. After processing the message, the ground station selectively returns information to the satellite, and the satellite forwards the information to the terminal device. For example, in this application scenario, a satellite positioning system and a satellite communication system may coexist. The satellite positioning system broadcasts a satellite radio navigation signal, and the terminal device completes capturing, tracking, positioning, and the like based on the satellite positioning system. Then, the terminal device completes satellite communication based on the satellite communication system. Optionally, positioning continuity of the terminal device can be ensured in the application scenario. For another example, in this application scenario, the satellite communication system may directly perform satellite communication. The application scenario may be a scenario in which the terminal device uses a short message communication service in a special scenario or in a scenario without a network, or may be another scenario. This is not limited in this application.

Optionally, the satellite positioning system may be, but is not limited to, a radio navigation satellite system (radio navigation satellite system, RNSS) or the like. The RNSS may broadcast a satellite radio navigation signal. After capturing sufficient satellites, the terminal device can automatically complete ranging and positioning. The satellite communication system may be, but is not limited to, a radio determination satellite system (radio determination satellite system, RDSS), the Globalstar, the Iridium, or the like. The RDSS implements a service function of a BeiDou navigation satellite system, and may provide a bidirectional short message information service (that is, a satellite communication function).

For example, as shown in FIG. 2, an operating process of the RNSS and the RDSS may be as follows: The terminal device completes positioning based on a satellite signal broadcast by the RNSS. When the terminal device needs to communicate, the terminal device may broadcast a message to a satellite based on an RDSS transmitter (transmitter, TX) link. The satellite forwards the message to the ground station. After the ground station sends the message to the terminal device by using the satellite, the terminal device parses, based on an RDSS receiver (receiver, RX) link, communication information broadcast by the ground station.

The terminal device is also referred to as user equipment (user equipment, UE), a mobile station (mobile station, MS), a mobile terminal (mobile terminal, MT), or the like, and is a device that provides a user with voice and/or data connectivity. For example, the terminal device may include a handheld device, a vehicle-mounted device, or the like that has a wireless connection function. Currently, the terminal device may be a mobile phone (mobile phone), a tablet computer, a notebook computer, a palmtop computer, a mobile internet device (mobile internet device, MID), a wearable device, a consumption terminal (for example, a watch or a band), a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

In this application, the terminal device may support functions of the satellite positioning system and the satellite communication system.

Currently, an area and costs of a chip that supports functions of the satellite positioning system and the satellite communication system are large. Based on this, embodiments of this application provide a chip, a circuit board assembly, and a communication apparatus, to reduce an area of a chip integrating the functions of the satellite positioning system and the satellite communication system, and reduce system costs.

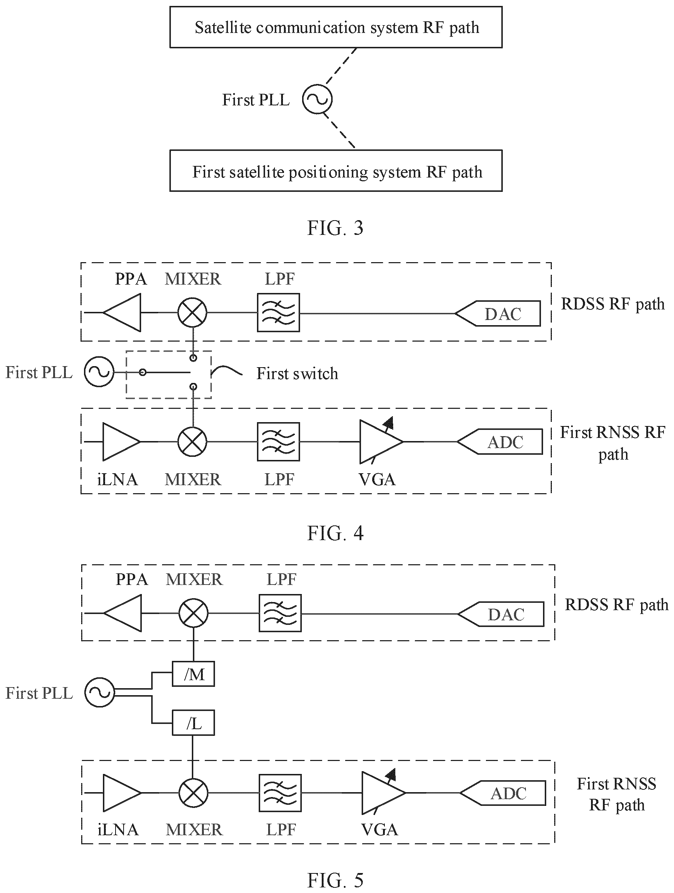

FIG. 3 shows a chip according to an embodiment of this application. The chip may include a satellite communication system radio frequency (radio frequency, RF) path, a first satellite positioning system RF path, and a first phase-locked loop (phase-locked loop, PLL). The satellite communication system RF path and the first satellite positioning system RF path share the first phase-locked loop. In this way, the satellite communication system RF path and the first satellite positioning system RF path share the first phase-locked loop, so that a quantity of phase-locked loops disposed in the chip can be reduced, thereby reducing an area of the chip and reducing system costs.

Optionally, the satellite communication system RF path may be an RDSS RF path, and the satellite positioning system RF path is an RNSS RF path. In other words, the first satellite positioning system RF path is a first RNSS RF path. In the following descriptions, for ease of description, descriptions are provided by using only an example in which the satellite communication system RF path may be the RDSS RF path and the satellite positioning system RF path is the RNSS RF path. In the descriptions of this application, descriptions are provided by using only an example in which the satellite communication system is the RDSS and the satellite positioning system is the RNSS. It should be understood that the satellite communication system may alternatively be a satellite communication system other than the RDSS, and the satellite positioning system may alternatively be a satellite positioning system other than the RNSS. The examples of this application are not intended to limit the satellite communication system and the satellite positioning system. Another satellite communication system and another satellite positioning system may be described instead.

For example, the RDSS RF path may be an RDSS TX RF path, or may be an RDSS RX RF path. In the following descriptions of this application, the RDSS TX RF path is merely used as an example for description, and this is not intended to limit embodiments of this application. The RNSS RF path may be an RNSS RX RF path.

The RDSS RF path may include at least one of the following: a digital-to-analog converter, a low-pass filter, a mixer, or a power amplifier. The RDSS RF path may implement at least one item of the following processing on an RDSS signal: digital-to-analog conversion, filtering, up-conversion, radio frequency transmission, and the like.

The first RNSS RF path may include at least one of the following: an analog-to-digital converter, a variable-gain amplifier, a low-pass filter, a mixer, and a low-noise amplifier. The first RNSS RF path may implement at least one item of the following processing on an RNSS signal: analog-to-digital conversion, filtering, down-conversion, and the like.

The digital-to-analog converter may be implemented by using a digital-to-analog converter (digital-to-analog converter, DAC), and the DAC completes digital-to-analog conversion.

The low-pass filter may be implemented by using a low-pass filter (low-pass filter, LPF), and the LPF is configured to complete signal filtering to suppress impact of an unnecessary signal (for example, an interference signal) on a link and improve path performance.

The mixer may be implemented by using a MIXER, and the MIXER is configured to complete up-conversion of the RDSS RF path, or is configured to complete down-conversion of the RNSS RF path.

The power amplifier may be implemented by using a power amplifier (power amplifier, PA or PPA). The PPA may be configured to amplify RDSS TX transmit power, to ensure that a satellite successfully receives a corresponding signal.

The analog-to-digital converter may be implemented by using an analog-to-digital converter (analog-to-digital converter, ADC). The ADC may be configured to complete analog-to-digital conversion.

The variable-gain amplifier may be implemented by using a variable-gain amplifier (variable-gain amplifier, VGA). The VGC may be configured to perform automatic gain control on an input signal.

The low-noise amplifier may be implemented by using a low-noise amplifier (low-noise amplifier, LNA). The LNA may be configured to amplify a received signal of the RNSS, to reduce noise interference. An LNA disposed on a chip may be referred to as an internal LNA (internal LNA, iLNA).

It should be understood that implementations of the foregoing components are merely examples, and may be alternatively implemented by using other specific components. Details are not listed in this application.

In an optional implementation a1, the chip may further include a first switch, and the first switch may include a first end, a second end, and a third end. In other words, the first switch may be a single-pole double-throw switch. The first end is connected to the first phase-locked loop, the second end is connected to the RDSS RF path, and the third end is connected to the first RNSS RF path. When the first end is connected to the second end, the first phase-locked loop is connected to the RDSS RF path. When the first end is connected to the third end, the first phase-locked loop is connected to the first RNSS RF path. In other words, the RDSS RF path and the first RNSS RF path may share the first phase-locked loop by using the first switch.

In a case in which the RDSS RF path and the first RNSS RF path may share the first phase-locked loop by using the first switch, when the RDSS RF path operates, the first phase-locked loop operates in an RDSS mode; or when the first RNSS RF path operates, the first phase-locked loop operates in a first RNSS mode. In other words, the first switch is used to control the RDSS RF path or the first RNSS RF path to be connected to the first phase-locked loop, or the first switch is used to control the first phase-locked loop to operate in the RDSS mode or the first RNSS mode.

For example, the second end may be connected to a mixer in the RDSS RF path, and the third end may be connected to a mixer in the first RNSS RF path.

Descriptions are provided by using an example in which the RDSS RF path includes a DAC, an LPF, a MIXER, and a PPA, and the first RNSS RF path includes an ADC, a VGA, an LPF, a MIXER, and an iLNA. A diagram in which the RDSS RF path and the first RNSS RF path share the first phase-locked loop (the first PLL) by using the first switch may be shown in FIG. 4. In FIG. 4, an end that is of the first switch and that is connected to the first PLL may be understood as the first end, an end that is of the first switch and that is connected to the MIXER in the RDSS RF path may be understood as the second end, and an end that is of the first switch and that is connected to the MIXER in the first RNSS RF path may be understood as the third end.

In another optional implementation a2, the RDSS RF path and the first RNSS RF path may be both connected to the first PLL, that is, the RDSS RF path and the first RNSS RF path may both use the first PLL. In other words, the first PLL is connected to the RDSS RF path, and is connected to the first RNSS RF path.

For example, the first PLL is connected to a mixer in the RDSS RF path, and is connected to a mixer in the first RNSS RF path.

When both the RDSS RF path and the first RNSS RF path are connected to the first PLL, the RDSS RF path and the first RNSS RF path may correspond to different frequency division coefficients.

Descriptions are still provided by using the example in which the RDSS RF path includes a DAC, an LPF, a MIXER, and a PPA, and the first RNSS RF path includes an ADC, a VGA, an LPF, a MIXER, and an iLNA. A diagram in which the RDSS RF path and the first RNSS RF path both use the first PLL may be shown in FIG. 5. FIG. 5 shows that the RDSS RF path and the first RNSS RF path respectively correspond to different frequency division coefficients M and L.

Optionally, the chip may further include a second RNSS RF path, so that continuity of user positioning can be ensured by using the second RNSS RF path.

The second RNSS RF path may include at least one of the following: an analog-to-digital converter, a variable-gain amplifier, a low-pass filter, a mixer, or a low-noise amplifier. For implementation forms of the foregoing components, refer to the foregoing related corresponding descriptions. Details are not described herein again.

In an example b1, the chip may further include a second phase-locked loop (a second PLL), and the second PLL is connected to the second RNSS RF path.

For example, the second PLL is connected to a mixer in the second RNSS RF path.

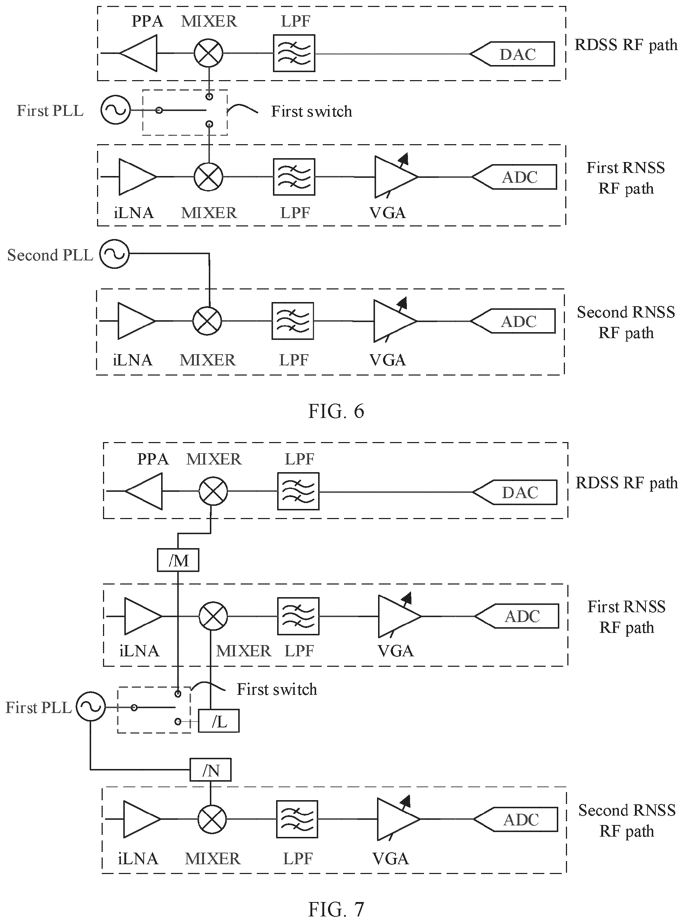

Descriptions are provided by using an example in which the second RNSS RF path includes an ADC, a VGA, an LPF, a MIXER, and an iLNA. Based on the foregoing implementation a1, a diagram of a connection between the second PLL and the second RNSS RF path may be shown in FIG. 6.

In an example b2, the second RNSS RF path may be connected to the first PLL. In this example, the RDSS RF path, the first RNSS RF path, and the second RNSS RF path share the same phase-locked loop. In this way, in comparison with the chip in the foregoing example b1, a second PLL is saved, so that an area of the chip can be smaller, and system costs can be lower.

For example, the first PLL may be connected to a mixer in the second RNSS RF path.

When the RDSS RF path, the first RNSS RF path, and the second RNSS RF path share one phase-locked loop, the RDSS RF path, the first RNSS RF path, and the second RNSS RF path may respectively correspond to different frequency division coefficients.

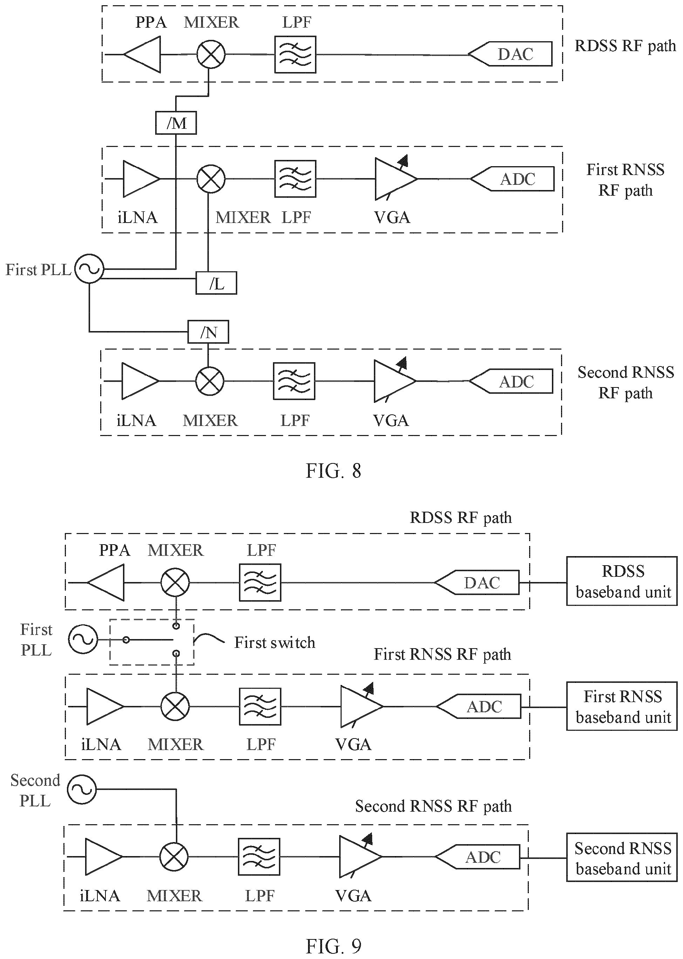

Descriptions are still provided by using the example in which the second RNSS RF path includes an ADC, a VGA, an LPF, a MIXER, and an iLNA. In the foregoing described different manners in which the RDSS RF path and the first RNSS RF path share the first PLL. Diagrams in which the RDSS RF path, the first RNSS RF path, and the second RNSS RF path share the first PLL may be respectively shown in FIG. 7 and FIG. 8. In FIG. 7, the RDSS RF path and the first RNSS RF path share the first PLL by using the first switch, and the second RNSS RF path is directly connected to the first PLL. In FIG. 8, the RDSS RF path, the first RNSS RF path, and the second RNSS RF path are all directly connected to the first PLL, that is, the RDSS RF path, the first RNSS RF path, and the second RNSS RF path may all use the first PLL. FIG. 7 and FIG. 8 show examples in which the RDSS RF path, the first RNSS RF path, and the second RNSS RF path respectively correspond to different frequency division coefficients M, L, and N, and values of M, L, and N are not limited.

Optionally, the chip may further include a satellite communication system baseband unit. Descriptions are provided below by using an example in which the satellite communication system baseband unit is an RDSS baseband unit. The RDSS baseband unit is connected to the RDSS RF path, and the RDSS baseband unit may be configured to input a signal to the RDSS RF path or receive a signal output by the RDSS RF path.

For example, the RDSS baseband unit may include at least one of the following modules: a packet assembly module, a modulation module, a filtering module, and the like. The RDSS baseband unit can implement functions such as assembly and noise cancellation of communication information for use of a lower-level link.

The chip may further include a first satellite positioning system baseband unit and a second satellite positioning system baseband unit. Descriptions are provided below by using an example in which the first satellite positioning system baseband unit and the second satellite positioning system baseband unit are respectively a first RNSS baseband unit and a second RNSS baseband unit. The first RNSS baseband unit is connected to the first RNSS RF path, and the first RNSS baseband unit is configured to receive a signal output by the first RNSS RF path. The second RNSS baseband unit is connected to the second RNSS RF path, and the second RNSS baseband unit is configured to receive a signal output by the second RNSS RF path.

For example, both the first RNSS baseband unit and the second RNSS baseband unit may include at least one of the following modules: a capture module, a tracking module, a positioning module, and the like. The first RNS S baseband unit and the second RNSS baseband unit may implement functions such as searching and tracking of a carrier frequency and a code phase of an RNSS signal, and message parsing, to finally resolve information such as a location, a speed, and time of the terminal device.

For example, FIG. 9 is a diagram of a chip including the RDSS baseband unit, the first RNSS baseband unit, and the second RNSS baseband unit. It should be understood that in FIG. 9, a form in which the RDSS RF path, the first RNSS RF path, and the second RNSS RF path share the phase-locked loop is merely an example, may be replaced with any form in the foregoing descriptions, and is not shown herein one by one.

In an optional implementation, the first RNSS RF path may be an RNSS L1 RF path, or the like, and the second RNSS RF path may be an RNSS L5 RF path, an RNSS L2 RF path, or the like. Certainly, the first RNSS RF path and the second RNSS RF path may alternatively be other types of paths. This is not limited in this application.

The RNSS L1 and the RNSS L5 may include frequencies such as B1I, B1C, B2a, and B2b of the BeiDou system, frequency signals of global positioning systems in various modes such as the global positioning system (global position system, GPS), the global navigation satellite system (GLONASS), and the Galileo (Galileo) system, or frequency signals of regional positioning systems such as the quasi-zenith satellite system (Quasi-Zenith satellite system, QZSS) and the Indian regional navigation satellite system (Indian regional navigation satellite system, IRNSS).

Based on the foregoing embodiments, an embodiment of this application further provides a circuit board assembly. The circuit board assembly may include a circuit board and the foregoing described chip, and the foregoing described chip may be disposed on the circuit board. For detailed descriptions of the chip, refer to the foregoing descriptions. Details are not described herein again.

In an optional implementation, the circuit board may include a component connected to the chip.

For example, a component that is on the circuit board and that is connected to the RDSS RF path may include at least one of the following: an LPF, a PA, or an antenna (antenna), where the antenna is configured to receive or send an RDSS signal. A component that is on the circuit board and that is connected to the first RNSS RF path may include at least one of the following: an LPF, an LNA, or an antenna, where the antenna may be configured to receive a first RNSS signal.

For example, when the RDSS RF path and the first RNSS RF path in the chip share the first PLL by using the first switch, an antenna that is on the circuit board and that is connected to the RDSS RF path and an antenna that is on the circuit board and that is connected to the first RNSS RF path may be a same antenna, and is denoted as an antenna 1, that is, the two paths share the antenna 1. Specifically, the two paths may share the antenna 1 by using a second switch. When the RDSS RF path operates, the RDSS RF path uses the antenna 1. When the first RNSS RF path operates, the first RNSS RF path uses the antenna 1.

When the RDSS RF path and the first RNSS RF path in the chip may both use the first PLL, the antenna that is on the circuit board and that is connected to the RDSS RF path and the antenna that is on the circuit board and that is connected to the first RNSS RF path may be different antennas.

Optionally, when the chip further includes the second RNSS RF path, the circuit board may further include a component connected to the second RNSS RF path, for example, may include one or more of the following: an LPF, an LNA, or an antenna, where the antenna may be configured to receive a second RNSS signal.

The following describes the circuit board assembly by using an example in which the RDSS RF path in the chip is an RDSS TX RF path, the first RNSS RF path in the chip is an RNSS L1 RF path, and the second RNSS RF path in the chip is an RNSS L5 RF path.

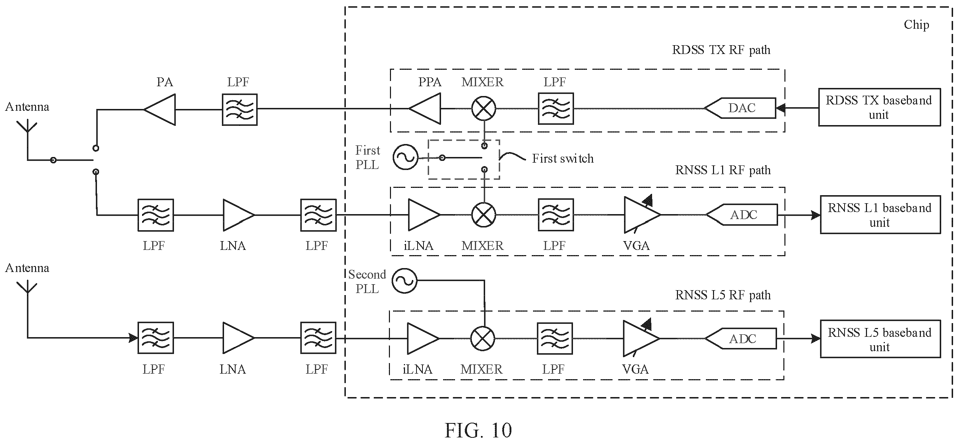

For example, FIG. 10 is a diagram of a possible circuit board assembly. Based on the circuit board assembly shown in FIG. 10, the RDSS TX RF path and the RNSS L1 RF path share the first PLL. When only the RNSS L1 RF path operates, the first PLL operates in an RNSS L1 mode, and the RNSS L1 RF path and the RNSS L5 RF path may jointly support user positioning. When the RDSS TX RF path needs to operate, the first PLL operates in an RDSS TX mode. In this way, the RNSS L5 RF path can support user positioning, and the RDSS TX RF can send communication information. Based on this, no matter whether the RDSS TX RF path operates, continuity of user positioning can be ensured, and an RDSS TX communication function is also supported.

Specifically, based on the circuit board assembly shown in FIG. 10, the RNSS L1 has complete and independent radio frequency signal processing, baseband signal processing, positioning, and solving capabilities. The RNSS L5 has complete and independent radio frequency signal processing, baseband signal processing, positioning, and solving capabilities. The RDSS TX has complete and independent radio frequency signal processing, baseband signal processing, and information packet assembly and coding capabilities. The RNSS L1 and the RDSS TX share one phase-locked loop. When the RNSS L1 operates, a PLL frequency operates in the RNSS L1 mode. When the RDSS TX operates, the PLL frequency operates in the RDSS TX mode. The RNSS L1 and the RNSS L5 can perform capturing, tracking, and positioning at the same time. When the RDSS TX operates, the RNSS L5 can still complete capturing, tracking, and positioning.

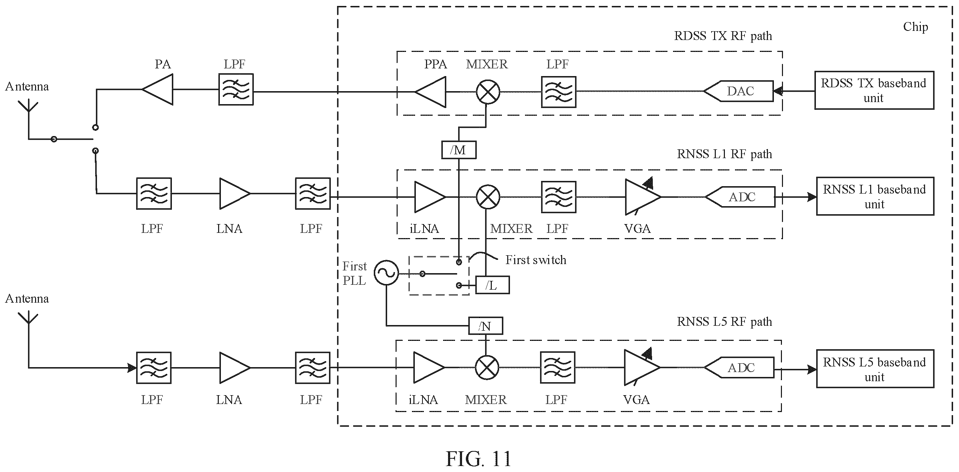

In still another example, FIG. 11 is a diagram of another possible circuit board assembly. Based on the circuit board assembly shown in FIG. 11, when the RNSS L1 RF path operates, the first PLL operates in an RNSS L1+RNSS L5 mode, and the RNSS L1 RF path and the RNSS L5 RF path may jointly support user positioning. When the RDSS TX RF path needs to operate, the first PLL operates in an RDSS TX+RNSS L5 mode. In this way, the RNSS L5 RF path can support user positioning, and the RDSS TX RF path can send communication information. Based on this, no matter whether the RDSS TX RF path operates, continuity of user positioning can be ensured, and an RDSS TX communication function is also supported.

Specifically, based on the circuit board assembly shown in FIG. 11, the RNSS L1 has complete and independent radio frequency signal processing, baseband signal processing, positioning, and solving capabilities. The RNSS L5 has complete and independent radio frequency signal processing, baseband signal processing, positioning, and solving capabilities. The RDSS TX has complete and independent radio frequency signal processing, baseband signal processing, and information packet assembly and coding capabilities. The RNSS L1, the RNSS L5, and the RDSS TX share one phase-locked loop. When the RNSS L1 operates, a PLL frequency operates in the RNSS L1+RNSS L5 mode. When the RDSS TX operates, the PLL frequency operates in the RDSS TX+RNSS L5 mode. The RNSS L1 and the RNSS L5 can perform capturing, tracking, and positioning at the same time. When the RDSS TX operates, the RNSS L5 can still complete capturing, tracking, and positioning.

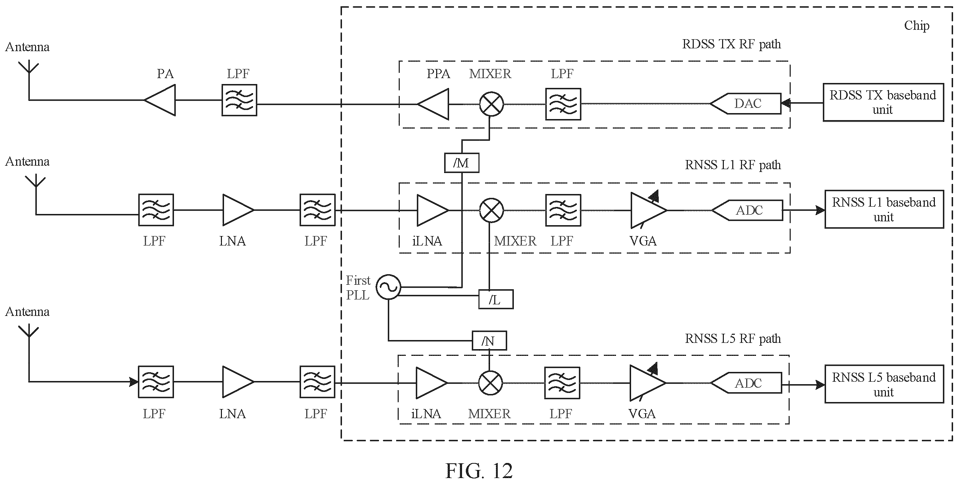

In still another example, FIG. 12 is a diagram of still another possible circuit board assembly. Based on the circuit board assembly shown in FIG. 12, the RDSS TX RF path, the RNSS L1 RF path, and the RNSS L5 RF path may share the first PLL. The first PLL can ensure that the RNSS L1 RF path, the RNSS L5 RF path, and the RDSS TX RF path operate at the same time. In other words, the RNSS L1 RF path and the RNSS L5 RF path can be used to support user positioning, and the RDSS TX RF path can send communication information.

Specifically, based on the circuit board assembly shown in FIG. 12, the RNSS L1 has complete and independent radio frequency signal processing, baseband signal processing, positioning, and solving capabilities. The RNSS L5 has complete and independent radio frequency signal processing, baseband signal processing, positioning, and solving capabilities. The RDSS TX has complete and independent radio frequency signal processing, baseband signal processing, and information packet assembly and coding capabilities. The RNSS L1, the RNSS L5, and the RDSS TX share one phase-locked loop, and the first PLL can ensure that the RNSS L1, the RNSS L5, and the RDSS TX operate at the same time. The RNSS L1 and the RNSS L5 can perform capturing, tracking, and positioning at the same time. When the RDSS TX operates, the RNSS L1 and the RNSS L5 can still complete capturing, tracking, and positioning.

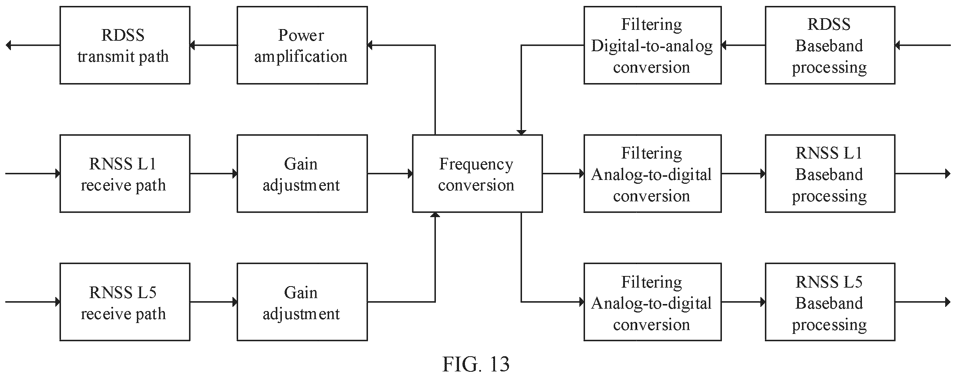

Based on the foregoing embodiments, the chip provided in embodiments of this application can support a low-cost architecture of RNSS transmission and RDSS transmission in parallel, and the RNSS and the RDSS transmission reuse a phase-locked loop on a premise RNSS positioning does not affect user experience. This ensures a positioning capability and a communication capability of the terminal device, and reduces an area of the chip and system costs. For example, in the diagram of the RNSS transmission and the RDSS transmission in parallel shown in FIG. 13, frequency conversion involves that the RNSS and the RDSS reuse the phase-locked loop.

The RNSS L1 and the RDSS TX may share one phase-locked loop, and the RNSS L5 is used to ensure the positioning continuity. Alternatively, the RNSS L1, the RNSS L5, and the RDSS TX may share one phase-locked loop. The RNSS L1 and the RDSS TX still perform time division multiplexing, and the RNSS L5 is used to maintain positioning continuity. Alternatively, the RNSS L1, the RNSS L5, and the RDSS TX may share one phase-locked loop, and both the RNSS L1 and the RNSS L5 may be used to maintain positioning continuity. For a specific implementation in which the RDSS and the RNSS reuse the phase-locked loop, refer to the descriptions in the foregoing embodiments, and details are not described herein again.

Based on the foregoing embodiments, an embodiment of this application further provides a communication apparatus. The communication apparatus may include the chip described in the foregoing embodiments. For detailed descriptions of the chip, refer to related descriptions in the foregoing embodiments. Details are not described herein again. For example, the communication apparatus may be a terminal device, or the like.

Optionally, the communication apparatus may include the circuit board assembly described in the foregoing embodiments. For details, refer to the foregoing descriptions. Details are not described herein again.

Although example embodiments of this application are described, persons skilled in the art can make changes and modifications to these embodiments after they learn of a basic inventive concept. Therefore, the following claims are intended to be construed as to cover the example embodiments and all changes and modifications falling within the scope of this application.

It is clear that persons skilled in the art can make various modifications and variations to this application without departing from the scope of this application. This application is intended to cover these modifications and variations of this application provided that they fall within the scope of protection defined by the claims of this application and their equivalent technologies.

## Claims

1. A chip, comprising a satellite communication system radio frequency RF path, a first satellite positioning system RF path, and a first phase-locked loop, wherein
the satellite communication system RF path and the first satellite positioning system RF path share the first phase-locked loop.

2. The chip according to claim 1, further comprising a first switch, wherein the first switch comprises a first end, a second end, and a third end;
the first end is connected to the first phase-locked loop, the second end is connected to the satellite communication system RF path, and the third end is connected to the first satellite positioning system RF path; and
when the first end is connected to the second end, the first phase-locked loop is connected to the satellite communication system RF path; or
when the first end is connected to the third end, the first phase-locked loop is connected to the first satellite positioning system RF path.

3. The chip according to claim 2, wherein the second end is connected to a mixer in the satellite communication system RF path, and the third end is connected to a mixer in the first satellite positioning system RF path.

4. The chip according to claim 1, wherein the first phase-locked loop is connected to the satellite communication system RF path, and is connected to the first satellite positioning system RF path.

5. The chip according to claim 4, wherein the first phase-locked loop is connected to a mixer in the satellite communication system RF path, and is connected to a mixer in the first satellite positioning system RF path.

6. The chip according to any one of claims 1 to 5, further comprising a second satellite positioning system RF path, wherein the first phase-locked loop is connected to the second satellite positioning system RF path.

7. The chip according to claim 6, wherein the first phase-locked loop is connected to a mixer in the second satellite positioning system RF path.

8. The chip according to claim 6 or 7, wherein the satellite communication system RF path, the first satellite positioning system RF path, and the second satellite positioning system RF path correspond to different frequency division coefficients.

9. The chip according to any one of claims 1 to 5, further comprising a second phase-locked loop and a second satellite positioning system RF path, wherein the second phase-locked loop is connected to the second satellite positioning system RF path.

10. The chip according to claim 9, wherein the second phase-locked loop is connected to a mixer in the second satellite positioning system RF path.

11. The chip according to any one of claims 6 to 10, wherein the first satellite positioning system RF path is a satellite positioning system L1 RF path, and the second satellite positioning system RF path is a satellite positioning system L5 RF path or a satellite positioning system L2 RF path.

12. The chip according to any one of claims 6 to 11, wherein the second satellite positioning system RF path comprises at least one of the following: an analog-to-digital converter, a variable-gain amplifier, a low-pass filter, a mixer, or a low-noise amplifier.

13. The chip according to any one of claims 1 to 12, wherein the satellite communication system RF path comprises at least one of the following: a digital-to-analog converter, a low-pass filter, a mixer, or a power amplifier; and
the first satellite positioning system RF path comprises at least one of the following: an analog-to-digital converter, a variable-gain amplifier, a low-pass filter, a mixer, or a low-noise amplifier.

14. A circuit board assembly, comprising a circuit board and the chip according to any one of claims 1 to 13, wherein the chip is disposed on the circuit board.

15. A communication apparatus, comprising the chip according to any one of claims 1 to 13.
